# EUROPEAN PATENT SPECIFICATION

(11) **EP 4 039 547 B1**
(45) Date of publication and mention of the grant of the patent: **02.08.2023**
(21) Application number: 22154470.3
(22) Date of filing: 01.02.2022
(51) Int. Cl.: B60R 19/18

(54) **BUMPER REINFORCEMENT**
STOSSFÄNGERVERSTÄRKUNG
RENFORT DE PARE-CHOCS

(30) Priority: 04.02.2021 JP 2021016708
(43) Date of publication of application: 10.08.2022
(73) Proprietor: TOYOTA JIDOSHA KABUSHIKI KAISHA, Toyota-shi, Aichi-ken, 471-8571 (JP); Aisin Keikinzoku Co., Ltd., Toyama 934-8588 (JP); AISIN CORPORATION, Aichi 448-8650 (JP)
(72) Inventor: NAITO, Takahiro, TOYOTA-SHI, AICHI-KEN, 471-8571 (JP); MATSUI, Kyosuke, IMIZU-SHI, TOYAMA, 934-8588 (JP); YATSUNAMI, Hiroyuki, KARIYA, AICHI, 448-8650 (JP)
(74) Representative: Cabinet Beau de Loménie

(56) References cited:
- JP-A- 2019 006 168

## Description

### TECHNICAL FIELD

The present disclosure relates to a bumper reinforcement extending along a vehicle lateral direction at the front of a vehicle.

### BACKGROUND

A bumper reinforcement extending along a vehicle lateral direction is provided at the front of a vehicle to improve impact resistance properties. Various structures have been proposed for such a bumper reinforcement.

For example, JP 2019-006168 A discloses a bumper reinforcement according to the preamble of claim 1, which includes a front wall, a rear wall, and horizontal walls connecting the front and rear walls. JP 2019-006168 A discloses that each horizontal wall includes, at a lateral end portion of the bumper reinforcement, a cutout which extends in a vehicle lateral direction. The cutout divides the lateral end portion of the bumper reinforcement between a front portion and a rear portion. The front portion bends toward the rear wall.

JP 2015-058759 A discloses a bumper reinforcement (referred to as a "bumper beam" in JP 2015-058759 A) made of a hollow extrusion. JP 2015-058759 A discloses that the bumper reinforcement includes a substantially-rectangular cutout at a rear corner such that a front portion located in front of the cutout protrudes laterally outward.

However, with these conventional bumper reinforcements, in the event of a collision with an obstacle into the bumper reinforcement at a lateral end from the front, risk remains that an angular corner facing frontward may gouge sharply into the obstacle.

For example, in the case of JP 2019-006168 A, a lateral end of a rear portion protrudes outward further than a lateral end of a front portion. Because a front corner of the front portion and a front corner of the rear portion are both exposed forward, these two corners create risk that they will gouge into an obstacle in the event of a collision.

In the case of JP 2015-058759 A, when an obstacle collides into a lateral end portion of the bumper reinforcement, the protrusion may be bent sharply rearward from the root of the protrusion. As a result of the collision, an angular corner facing front may thus be formed at the root of the protrusion, creating risk that the angular corner will gouge into the obstacle.

In light of above, the present specification discloses a bumper reinforcement that can effectively prevent a lateral end portion of the bumper reinforcement from gouging sharply into an obstacle in the event of a collision with the obstacle and the lateral end portion of the bumper reinforcement from the front.

### SUMMARY

A bumper reinforcement according to the present disclosure includes a front wall, a rear wall disposed behind the front wall, at least one horizontal wall connecting the front wall and the rear wall, and a cutout in the at least one horizontal wall. The cutout extends laterally inward from a lateral end of the horizontal wall. The cutout divides the lateral end portion of the bumper reinforcement between a front end portion located in front of the cutout and a rear end portion located behind the cutout. The front end portion includes a protruded portion that is bent rearward to be tilted with respect to the rear wall and protrudes laterally outward further than a lateral end of the rear end portion.

Because the front end portion includes the protruded portion that protrudes laterally outward further than the lateral end of the rear end portion, a front corner of the rear end portion is covered and hidden by the front end portion. In the event of a collision with an obstacle from the front, a front corner of the front end portion is tilted rearward because the protruded portion is bent rearward. As a result, according to the present disclosure, the lateral end portion of the bumper reinforcement can be effectively prevented from sharply gouging into the obstacle because no angular corner faces the front in the event of a collision with an obstacle.

A protruded length of the protruded portion with respect to the rear end portion may be shorter than a width of the protruded portion.

With the above structure, the protruded portion becomes less easily bendable. In the event of a collision with an obstacle from the front, the protruded portion is thus only gently bent. As a result, a bent portion of the protruded portion can be prevented from gouging into the obstacle.

Before the front end portion is bent rearward in a manufacturing process, a front edge of the cutout may be substantially in parallel with the front wall, and a rear edge of the cutout may be tilted with respect to the rear wall to come closer to the rear wall toward a lateral end.

In the structure described above, the width, along the vehicle longitudinal direction, of the lateral end portion of the bumper reinforcement gradually decreases. In other words, the strength of the lateral end portion gradually decreases toward the lateral end. As a result, because a stress can be prevented from concentrating on a single point, a sharp bending and braking of the protruded portion can be effectively prevented.

With the present disclosure, the lateral end portion of the bumper reinforcement can be effectively prevented from sharply gouging into an obstacle.

### BRIEF DESCRIPTION OF DRAWINGS

Embodiments of the present disclosure will be described based on the following figures, wherein:
FIG. 1 is a schematic plan view with a bumper reinforcement according to an embodiment of the present disclosure;
FIG. 2 is a perspective view of the bumper reinforcement;
FIG. 3 is cross-sectional view taken along the line A-A of FIG. 1;
FIG. 4 is a plan view of a lateral end portion of the bumper reinforcement;
FIG. 5 is a plan view of the lateral end portion during a manufacturing process of the bumper reinforcement;
FIG. 6 is a plan view of the lateral end portion after an obstacle collided into the lateral end portion;
FIG. 7 is a plan view of a lateral end portion of a bumper reinforcement according to a first comparative example;
FIG. 8 is a plan view of a lateral end portion of a bumper reinforcement according to a second comparative example; and
FIG. 9 is a plan view of the lateral end portion of the bumper reinforcement according to the second comparative example after a collision with an obstacle.

### DESCRIPTION OF EMBODIMENTS

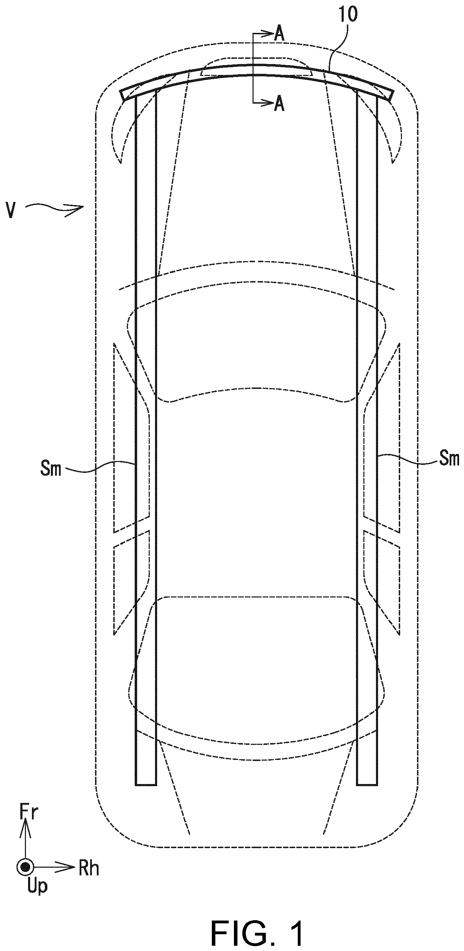

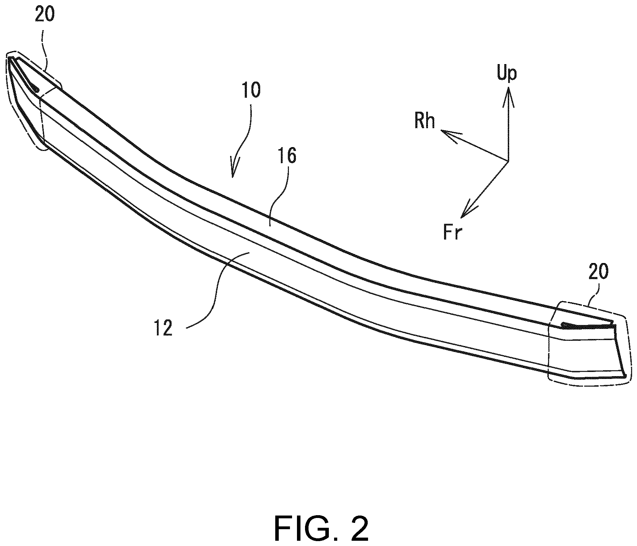

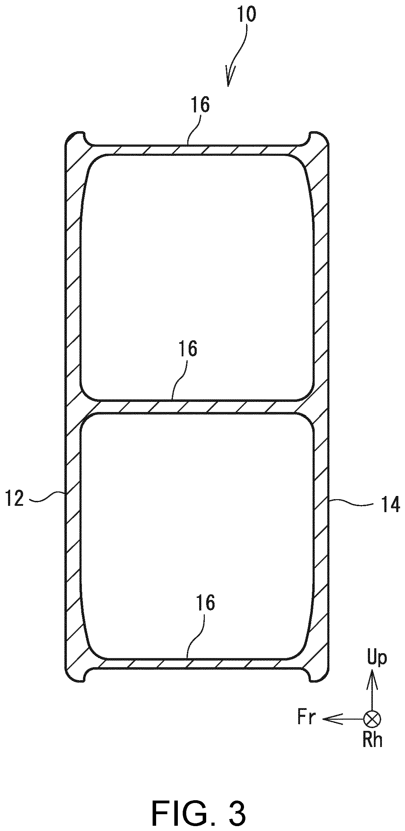

The structure of a bumper reinforcement 10 is described below with reference to the attached drawings. FIG. 1 is a schematic plan view of a vehicle V with the bumper reinforcement 10 attached. FIG. 2 is a perspective view of the bumper reinforcement 10, and FIG. 3 is a cross sectional view taken along the line A-A in FIG. 1. In each drawing, "Fr", "Up", and "Rh" indicate the front, upward, and right side of the vehicle V, respectively. In the description below, unless otherwise specified, terms describing relative positions and orientations, such as front, rear, lateral, and longitudinal, respectively indicate these in relation to the vehicle V. Lateral ends of a bumper reinforcement indicate the right and left ends of the bumper reinforcement. Laterally inward or outward indicates inward or outward along the lateral direction of the vehicle.

As shown in FIG. 1, the vehicle V includes a left and right pair of side members Sm, and the bumper reinforcement 10. The side members Sm are long frame members which extend along a vehicle longitudinal direction. The side members Sm are disposed at locations spaced apart from each other laterally. The bumper reinforcement 10 is a long frame member which extends in a vehicle lateral direction, and disposed at the front of the vehicle V. The front ends of the side members Sm are connected to the bumper reinforcement 10.

The bumper reinforcement 10 has a rectangular tube shape and extends horizontally between vehicle lateral ends (in other words, between the right and left sides) of the vehicle V. Specifically, as shown in FIG. 3, the bumper reinforcement 10 includes a front wall 12, a rear wall 14 disposed behind the front wall 12, and multiple horizontal walls 16 which connect the front wall 12 and the rear wall 14. Each of the front wall 12 and the rear wall 14 has a ribbon-like shape extending along a vehicle lateral direction. The wall surface of the front wall 12, that is a surface perpendicular to the thickness, faces forward. The wall surface of the rear wall 14 disposed behind the front wall 12 faces rearward. Each horizontal wall 16 between the front wall 12 and the rear wall 14 has a ribbon-like shape and extends in a vehicle lateral direction. In the present embodiment, three horizontal walls 16 are vertically stacked with space therebetween. One of the horizontal walls 16 connects the top edge of the front wall 12 and the top edge of the rear wall 14. Another horizontal wall 16 connects the bottom edges of the front and rear walls 12, 14. The other horizontal wall 16 connects vertically-center portions of the front and rear walls 12, 14.

The bumper reinforcement 10 attached to the vehicle V has a shape to conform along the front shape of the vehicle V. Specifically, the bumper reinforcement 10 is substantially curved to have a bow shape (shape similar to that of an archery bow) in a plan view such that the lateral end portions are located rearward further than the lateral center. In particular, the lateral end portions of the front wall 12 of the bumper reinforcement 10 are tilted toward the rear wall 14 such that the front wall 12 is closer to the rear wall 14 toward the lateral ends. This portion of the front wall 12 tilted toward the rear wall 14 at each end is referred to as an "end portion 20" in the description below.

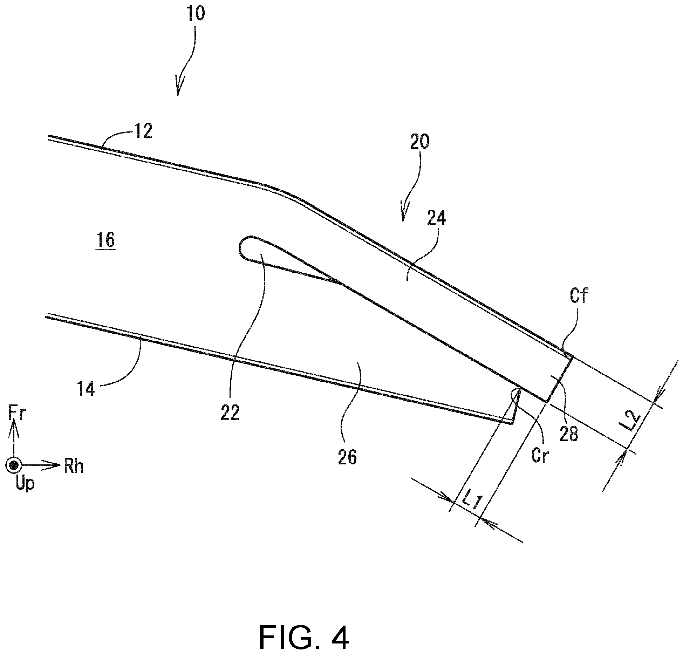

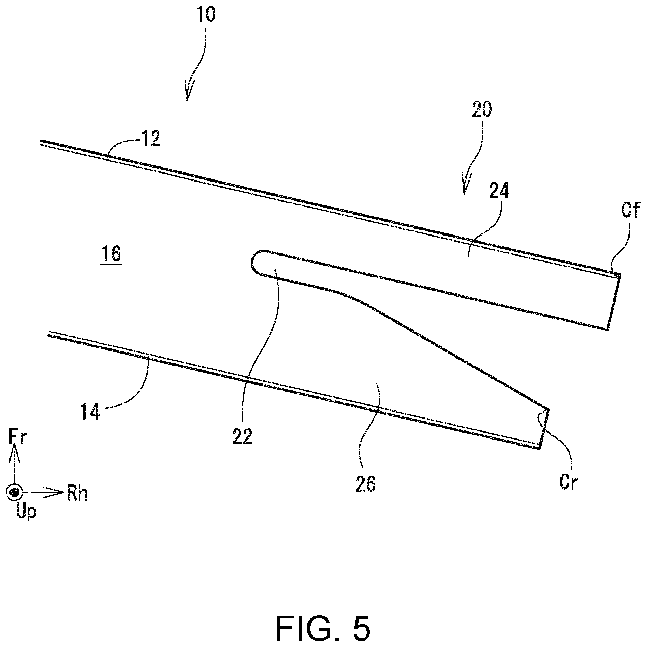

FIG. 4 is a plan view of the end portion 20. FIG. 5 is a plan view of the end portion 20 during a manufacturing process of the bumper reinforcement 10. As shown in FIGs. 4 and 5, the at least one horizontal wall 16 includes a cutout 22 extending laterally inward from the lateral end of the horizontal wall 16. The cutout 22 divides the end portion 20 between a front end portion 24 located in front of the cutout 22 and a rear end portion 26 located behind the cutout 22. The front end portion 24 is bent rearward to close the cutout 22 and in contact with the rear end portion 26

As shown in FIG. 5, before the front end portion 24 is bent in the manufacturing process, the cutout 22 expands toward the lateral end such that the width along a vehicle longitudinal direction becomes longer towards the lateral end. Specifically, the front edge of the cutout 22 is substantially parallel to the front wall 12, whereas the rear edge of the cutout 22 is tilted towards the rear wall 14 such that the rear edge is closer to the rear wall 14 toward the lateral end. In the present embodiment, the front end portion 24 is bent to close the cutout 22. As shown in FIG. 4, the front end portion 24 is thus tilted when completed such that the front end portion 24 is closer to the rear wall 14 toward the lateral end. The width of the end portion 20 along the vehicle longitudinal direction becomes gradually shorter toward the lateral end.

As shown in FIG. 5, the rear end portion 26 is cut at the lateral end such that the lateral end of the rear end portion 26 is located laterally inward further than the lateral end of the front end portion 24. When the bumper reinforcement 10 is completed with the front end portion 24 being bent, the lateral end of the front end portion 24 protrudes laterally outward further than the lateral end of the rear end portion 26, as shown in FIG. 4. The portion of the front end portion 24 that protrudes laterally outward further than the rear end portion 26 is referred to as a "protruded portion 28" in the description below. By providing the protruded portion 28, a front corner Cr of the rear end portion 26 is covered and hidden by the front end portion 24 when viewed from the front of the vehicle. A protruded length L1 of the protruded portion 28 is shorter than a width L2 of the protruded portion 28 (the width perpendicular to the protruding direction). Such a structure can prevent the protruded portion 28 from being rapidly bent in the event of a front collision. This is described further below.

The bumper reinforcement 10 described above can be obtained by processing a rectangular tube which includes the front wall 12, the rear wall 14, and the horizontal walls 16. The rectangular tube which can be used for the bumper reinforcement 10 may be manufactured by extruding an aluminum alloy. In such a case, the direction of extrusion is in a vehicle lateral direction. The rectangular tube is curved like an archery bow in a plan view during the manufacture of the bumper reinforcement 10. The horizontal walls 16 and the rear wall 14 are partially cut at the lateral end portion of the bumper reinforcement 10, that is, at the end portion 20, to form the cutout 22. The bumper reinforcement 10 is completed by bending rearward the front end portion 24 located in front of the cutout 22 to be in contact with the rear end portion 26.

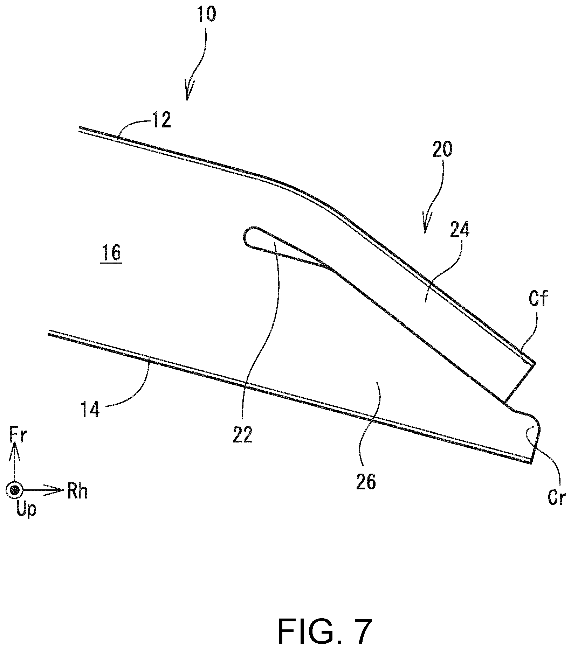

As apparent from the description above, the front end portion 24 protrudes laterally outward further than the lateral end of the rear end portion 26 in the present embodiment. Reasons for adopting this structure are described below using comparative examples. FIG. 7 is a plan view of a lateral end portion of a bumper reinforcement 10 according to a first comparative example. The bumper reinforcement 10 according to the first comparative example is disclosed in JP 2019-006168 A. The bumper reinforcement 10 according to the first comparative example similarly includes a front wall 12, a rear wall 14, and multiple horizontal walls 16. Further, a cutout 22 is formed at each lateral end portion of the bumper reinforcement 10 such that the cutout 22 divides the lateral end portion between a front end portion 24 and a rear end portion 26. However, in the first comparative example, the lateral end of the front end portion 24 is located laterally inward further than the lateral end of the rear end portion 26. Both of a front corner Cf of the front end portion 24 and a front corner Cr of the rear end portion 26 are thus exposed toward the front of the vehicle in this comparative example. In the event of a collision in which an obstacle collides into the lateral end portion of the bumper reinforcement 10 from the front in the first comparative example, the front corners Cf and Cr, both of which point forward, may have risk that the corners will sharply gouge into the obstacle.

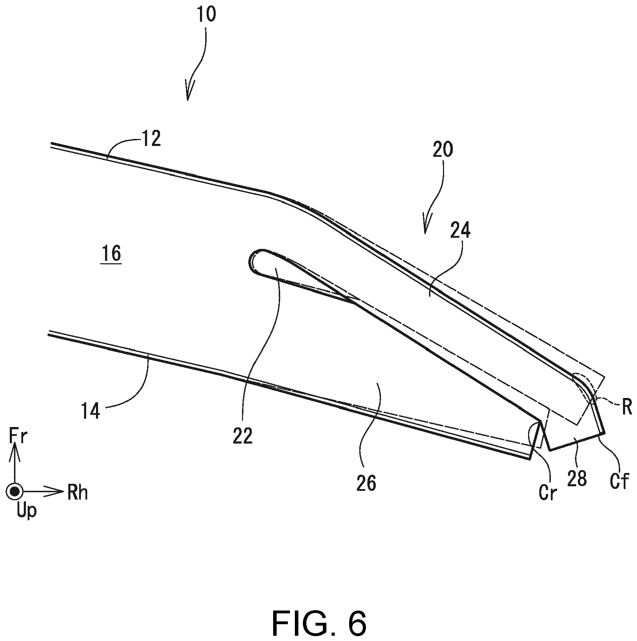

In contrast, in the present embodiment according to the present disclosure, as the front corner Cr of the rear end portion 26 is covered and hidden by the front end portion 24, the front corner Cr can be prevented from gouging into an obstacle. Further, the front end portion 24 includes the protruded portion 28 which protrudes laterally outward further than the rear end portion 26. In the event a rearward load is received, this protruded portion 28 can easily deform in a direction which will disperse the load. When an obstacle collides into the end portion 20 of the bumper reinforcement 10 from the front, the protruded portion 28 is deformed to be bent rearward from a root of the protruded portion 28. FIG. 6 is a plan view of the end portion 20 after an obstacle collided into the end portion 20. In FIG. 6, the broken lines show the shape of the end portion 20 before deformation. As shown in FIG. 6, when the protruded portion 28 is bent, the front corner Cf of the front end portion 24 is bent rearward without gouging into the obstacle. The protruded length L1 of the protruded portion 28 is shorter than the width L2 of the protruded portion 28. With such a structure, the protruded portion 28 is unlikely to be bent sharply. A bent portion R formed at the root of the protruded portion 28 is thus likely to have a gentle curve. This can prevent the bent portion R from gouging into the obstacle. The present embodiment can more effectively prevent the lateral end portion of the bumper reinforcement 10 from sharply gouging into an obstacle than the first comparative example.

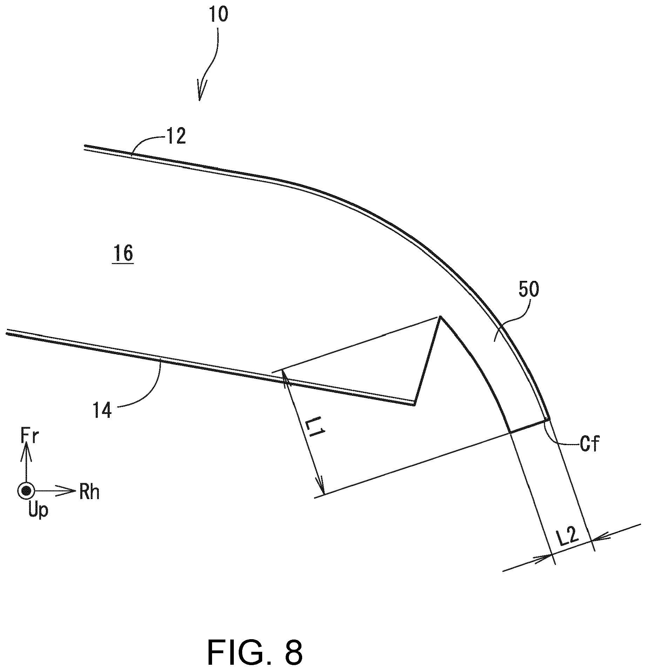

FIG. 8 is a plan view of a lateral end portion of a bumper reinforcement 10 according to a second comparative example. The bumper reinforcement 10 according to the second comparative example is disclosed in JP 2015-058759 A. The bumper reinforcement 10 according to the second example similarly includes a front wall 12, a rear wall 14, and multiple horizontal walls 16. In the second comparative example, a rear corner of a lateral end portion of a rectangular tube is cut to remove a substantially rectangular portion. The portion in front of the removed portion is a protruded portion 50 which protrudes laterally outward. The protruded portion 50 is gently curved rearward such that the protruded portion 50 is closer to the rear toward the lateral end.

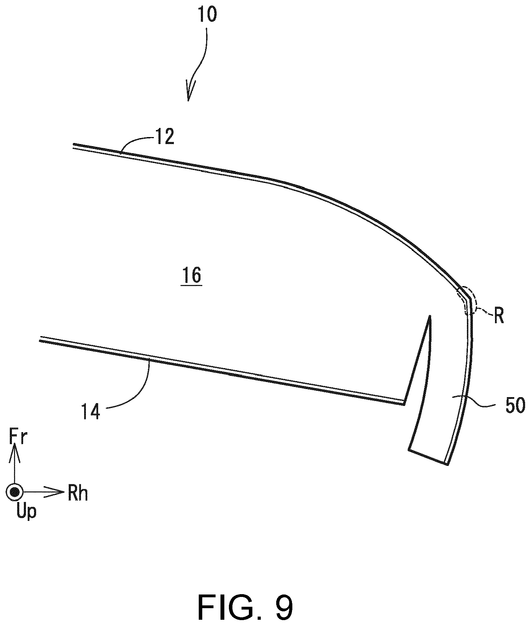

As the front corner Cf of the protruded portion 50 does not face the front in the second comparative example, the front corner Cf can be prevented from gouging into an obstacle in the event of a collision. However, the protruded length L1 of the protruded portion 50 in the second comparative example is significantly longer than the width L2. Further, the strength of the bumper reinforcement 10 in the second comparative example abruptly decreases at the root of the protruded portion 50. In the second comparative example, the stress is thus likely to be concentrated at the root of the protruded portion 50. As a result, when an obstacle collides into the lateral portion, the protruded portion 50 has risk to be sharply bent at the root or broken. FIG. 9 shows how the bumper reinforcement 10 of the second comparative example may deform after a collision with an obstacle. As shown in FIG. 9, an angular bent portion R may be formed when an obstacle collides in the second comparative example. This angular bent portion R has risk to sharply gouge into the obstacle.

In contrast, in the embodiment according to the present disclosure, as the protruded length L1 of the protruded portion 28 is shorter than the width L2 as described above, the protruded portion 28 is gently curved. As the bent portion R is not angular in the present embodiment, the bent portion R can be prevented from gouging sharply into an obstacle.

In the present embodiment, the horizontal walls 16 are partially cut out in the end portion 20 such that the width of the rear end portion 26 along a vehicle longitudinal direction becomes gradually shorter towards the lateral outer end. In other words, the strength of the bumper reinforcement 10 gradually decreases toward the lateral end. In the present embodiment, the stress is thus likely to disperse. As a result, in the event of a collision with an obstacle, not only the protruded portion 28 but also the entire end portion 20 deforms to absorb the impact energy. Because this prevents concentration of the stress at around the root of the protruded portion 28, and in turn prevents the sharp bending or breaking of the protruded portion 28, the bent portion R is prevented from forming a sharply-angled corner.

Furthermore, in the present embodiment, the manufacturing process of the bumper reinforcement 10 can be simplified compared to that of the second comparative example. In the second comparative example, there is no cutout 22 dividing the lateral end portion of the bumper reinforcement 10 between the front end portion 24 and the rear end portion 26. In order to tilt the front wall 12 toward the rear wall 14 at the lateral end portion of the rectangular tube, the lateral end portion is first heated to be softened, and then a pressure is applied to the lateral end portion to compressively deform the horizontal wall 16. These heating and pressuring processes consume significant time and effort.

In contrast, in the present embodiment, the front wall 12 is tilted toward the rear wall 14 by bending the front end portion 24 after partially removing a cutout from the horizontal wall 16. In other words, because no heating of the end portion 20 or the compressive deformation of the horizontal walls 16 is required in the present embodiment, the manufacturing process of the bumper reinforcement 10 in the present embodiment is simpler than that of the second comparative example.

As apparent in the above description, the present embodiment can effectively prevent an end of the bumper reinforcement 10 from sharply gouging into an obstacle in the event of a collision. The above described structures are merely examples. The structure can be changed as long as the cutout 22 is formed in the end portion 20 of the bumper reinforcement 10 to divide the end portion 20 between the front end portion 24 and the rear end portion 26, and the front end portion 24 includes the protruded portion 28 that is bent rearward and protrudes outward further than the lateral end of the rear end portion 26. For example, although three horizontal walls 16 are provided in the above description, the number of horizontal walls 16 may be changed as required. The ratio between the protruded length L1 and the width L2 of the protruded portion 28 may also be changed as required. For example, the protruded length L1 may be changed within the range from 0.5 to 2 times the width L2. The shape of the cutout 22 may also be changed. For example, the cutout 22 may have a uniform width (fixed dimension along the vehicle longitudinal direction).

## Claims

1. A bumper reinforcement (10) extending along a lateral direction of a vehicle at the front of the vehicle, the bumper reinforcement (10) comprising:
a front wall (12);
a rear wall (14) disposed behind the front wall (12);
at least one horizontal wall (16) connecting the front wall (12) and the rear wall (14);
a cutout (22) in the at least one horizontal wall (16), the cutout (22) extending laterally inward from a lateral end of the at least one horizontal wall (16),
wherein the cutout (22) divides a lateral end portion of the bumper reinforcement (10) between a front end portion (24) located in front of the cutout (22) and a rear end portion (26) located behind the cutout (22), and
the front end portion (24) comprises a protruded portion (28) bent rearward to be tilted with respect to the rear wall (14) **characterized in that** the protruded portion (28) is protruding laterally outward (L1) further than a lateral end of the rear end portion (26).

2. The bumper reinforcement (10) according to claim 1, wherein
a protruded length (L1) of the protruded portion (28) with respect to the rear end portion (26) is shorter than a width (L2) of the protruded portion (28).

3. The bumper reinforcement (10) according to claim 1 or 2, wherein
before the front end portion (24) is bent rearward in a manufacturing process, a front edge of the cutout (22) is substantially in parallel with the front wall (12), and a rear edge of the cutout (22) is tilted with respect to the rear wall (14) to come closer to the rear wall (14) toward a lateral end.

## Patentansprüche

1. Stoßstangen-Verstärkung (10), die sich entlang einer seitlichen Richtung eines Fahrzeugs an der Front des Fahrzeugs erstreckt, wobei die Stoßstangen-Verstärkung (10) umfasst:
eine vordere Wand (12),
eine hintere Wand (14), die hinter der vorderen Wand (12) angeordnet ist,
mindestens eine horizontale Wand (16), welche die vordere Wand (12) und die hintere Wand (14) verbindet,
einen Ausschnitt (22) in der mindestens einen horizontalen Wand (16), wobei der Ausschnitt (22) sich von einem seitlichen Ende der mindestens einen horizontalen Wand (16) seitlich einwärts erstreckt,
wobei der Ausschnitt (22) eine seitliche Endsektion der Stoßstangen-Verstärkung (10) zwischen einer vorderen Endsektion (24), die sich vor dem Ausschnitt (22) befindet, und einer hinteren Endsektion (26) unterteilt, die sich hinter dem Ausschnitt (22) befindet, und
die vordere Endsektion (24) eine wegragende Sektion (28) umfasst, die rückwärts gebogen ist, um in Bezug auf die hintere Wand (14) geneigt zu sein, **dadurch gekennzeichnet, dass** die wegragende Sektion (28) weiter seitlich nach außen (L1) wegragt als ein seitliches Ende der hinteren Endsektion (26).

2. Stoßstangen-Verstärkung (10) nach Anspruch 1, wobei
eine wegragende Länge (L1) der wegragenden Sektion (28) in Bezug auf die hintere Endsektion (26) kürzer ist als eine Breite (L2) der wegragenden Sektion (28).

3. Stoßstangen-Verstärkung (10) nach Anspruch 1 oder 2, wobei,
bevor die vordere Endsektion (24) in einem Herstellungsprozess rückwärts gebogen wird, ein vorderer Rand des Ausschnitts (22) im Wesentlichen parallel zu der vorderen Wand (12) ist, und ein hinterer Rand des Ausschnitts (22) in Bezug auf die hintere Wand (14) geneigt ist, um der hinteren Wand (14) zu dem seitlichen Ende hin näher zu kommen.

## Revendications

1. Renfort de pare-chocs (10) s'étendant le long d'une direction latérale d'un véhicule à l'avant du véhicule, le renfort de pare-chocs (10) comprenant :
une paroi avant (12) ;
une paroi arrière (14) disposée derrière la paroi avant (12) ;
au moins une paroi horizontale (16) reliant la paroi avant (12) et la paroi arrière (14) ;
une découpe (22) dans la au moins une paroi horizontale (16), la découpe (22) s'étendant latéralement vers l'intérieur depuis une extrémité latérale de la au moins une paroi horizontale (16),
la découpe (22) divisant une partie d'extrémité latérale du renfort de pare-chocs (10) entre une partie d'extrémité avant (24) située à l'avant de la découpe (22) et une partie d'extrémité arrière (26) située derrière la découpe (22), et
la partie d'extrémité avant (24) comprenant une partie saillante (28) pliée vers l'arrière pour être incliné par rapport à la paroi arrière (14), **caractérisé en ce que** la partie saillante (28) dépasse latéralement vers l'extérieur (L1) davantage qu'une extrémité latérale de la partie d'extrémité arrière (26).

2. Renfort de pare-chocs (10) selon la revendication 1, dans lequel
une longueur de saillie (L1) de la partie saillante (28) par rapport à la partie d'extrémité arrière (26) est plus courte qu'une largeur (L2) de la partie saillante (28).

3. Renfort de pare-chocs (10) selon la revendication 1 ou 2, dans lequel
avant que la partie d'extrémité avant (24) soit pliée vers l'arrière dans un processus de fabrication, un bord avant de la découpe (22) est sensiblement parallèle à la paroi avant (12), et un bord arrière de la découpe (22) est incliné par rapport à la paroi arrière (14) pour venir plus près de la paroi arrière (14) vers une extrémité latérale.
